Europäisches Patentamt

European Patent Office

Office européen des brevets

(11) Publication number: **0 310 446**
**A2**

(12) **EUROPEAN PATENT APPLICATION**

(21) Application number: **88309151.4**

(22) Date of filing: **30.09.88**

(51) Int. Cl.⁴: **G 06 F 12/08**

(30) Priority: **02.10.87 US 104632**

(43) Date of publication of application:
**05.04.89 Bulletin 89/14**

(84) Designated Contracting States: **DE FR GB IT**

(71) Applicant: **COMPUTER CONSOLES INCORPORATED (a Delaware corporation)**
**9801 Muirlands Boulevard**
**Irvine California 92718-2521 (US)**

(72) Inventor: **Benkual, Jack**
**25906 Greenbank**
**El Toro California 92630 (US)**

**Shottan, Shmuel**
**27605 Halcon Street**
**Mission Viejo California 92691 (US)**

(74) Representative: **Meddle, Alan Leonard et al**
**FORRESTER & BOEHMERT Widenmayerstrasse 4/l**
**D-8000 München 22 (DE)**

The title of the invention has been amended (Guidelines for Examination in the EPO, A-III, 7.3).

(54) **Cache memory management method.**

(57) A data processing system includes an instruction processor (101) and a main memory (105) that has such a relatively large number of addressable memory locations that the main memory has a latency time that is substantially longer than the time in which the instruction processor can initiate successive accesses to the memory. Buffer memory means is provided having a relatively small number of buffer locations into which data read from the main memory are stored initially as a duplicate of data stored in the main memory and thereafter modified and marked dirty. Sequentially operating means (109) including multi-biffer means provides for replacing data marked dirty with other data read from the main memory and thereafter causing the data marked dirty to be written into the main memory.

*FIG. 1*

Description

## MULTI-BUFFER USED IN PROCESSOR-TO-MEMORY DATA TRANSFER

Background of the Invention

In general, this invention relates to data processing systems; more particularly, it relates to a subsystem and a method for use in a data processing system that includes an instruction processor and a memory that has such a multiplicity of addressable memory locations that the memory has a latency time that is substantially longer than the time in which the instruction processor can initiate successive accesses to the memory.

The issues presented in establishing a computer architecture typically involve dealing with generally conflicting goals. For example, it is highly desirable to provide increased memory capacity in an addressable memory to hold larger programs and more data for use by an instruction processor. Another goal is to increase the rate at which instructions and data can be provided for execution by the instruction processor.

Over the years, there have been significant improvements in technology for implementing higher speed, higher capacity memories, and also in implementing higher speed, more powerful instruction processors.

As a result of the application of integrated circuit technology to manufacturing memory chips, the state of the art makes to practical to provide many megabytes of memory capacity in an addressable memory. By the same token, advances in technology have increased the power and the speed that it practical to achieve with respect to an instruction processor.

As to such increased power, this has been made possible in large part because of the high packing density possible within an instruction processor chip, or in each of a set of chips, as in the case of a processor based on a bit-slice approach. More particularly, the state of the art in integrated circuit fabrication technology is such that it is practical to incorporate in excess of 500,000 devices within a single chip measuring approximately 450 mils by 450 mils. This is practical now because of the availability of 1.2 micron CMOS (Complementary Metal Oxide Semiconductor) technology. With such a large number of devices on chip, the instruction processor can carry out very complex operations in very few basic clock cycles; indeed, each of many powerful instructions can be carried out by an instruction processor within the time defined by a single basic clock cycle.

As to the increased rate at which an instruction processor can operate, it is practical using state of the art integrated circuit technology to employ a very high basic clock rate for sequencing operations within an instruction processor; more particularly, it is practical using state of the art CMOS (Complementary Metal Oxide Semiconductor) technology to employ a rate in excess of 50 megahertz to provide a clock cycle as short as about 18 nanoseconds.

The speed at which large-capacity addressable memory can operate has also been increased over the years; it has reached the point at which commercially available memory chips, with a million bit-storing cells per chip, can be accessed for reading or writing within approximately 120 nanoseconds. The large ratio between 120-nanosecond access time and 18-nanosecond processing time is a major but not the sole factor involved in determining the ratio between memory cycle time and processor execution time. Other factors include matters referred to as "handshaking" that are involved in effecting communication of data via a bus structure; they further include arbitration matters in resolving competition for access to memory. The combined effect of the various factors is that processor-memory data-transfer cycles typically consume in the neighborhood of about 12 basic clock cycles of the instruction processor.

Because this ratio is high, a substantial penalty is incurred, in some circumstances, incident to a memory access. Such circumstances are those in which, incident to one of a sequence of instructions, such a memory access must be completed before the instruction can be completed or before the next instruction can start executing.

One of the reasons for the major factor underlying this high ratio is that an address decoding structure for a large capacity memory has numerous levels through which signals have to propagate. Generally, each doubling of the number of addressable memory locations results in a need for an additional level of address decoding structure, and attendant increase in latency time. Because this high ratio is attributable to such a structural feature, it remains high as implementing technology improves the speed of operation of devices usable both in a memory and in an instruction processor.

One of the significant developments in the field of computer architecture is directed to minimizing the adverse effect of this high ratio on overall system throughput. More particularly, this development is a cache memory for the instruction processor. A cache memory is a particular kind of buffer memory for storing instructions or data, or both; in comparison with main memory it has relatively small capacity and has attendant relatively high speed. For various reasons including the way in which programs are organized to define loops and the like, a statistically high percentage of both instruction fetches and executions of load and store instructions reference a recently referenced memory location. This point is sometimes referred to as "locality of reference."

A cache memory provides for taking advantage of such locality of reference. The basic idea is to arrange to load a fast access, relatively small, buffer memory so that most frequently an instruction or data item can be found in it to obviate accessing main memory.

Certain structure distinguishes a cache memory from main memory. This distinguishing structure involves, among other things, addressing structure used for associative addressing. Each location in a cache memory has memory cells for storing information such as instructions or data, and other memory cells for storing a tag. Such stored tags are used by comparator circuitry incorporated in the associative-addressing structure. More particularly, when a memory address is supplied to the cache memory by a program counter or address register, the comparator circuitry compares one or more stored tags against a portion of the memory address. If a stored tag has the same value as that portion, there is a cache hit, meaning that the desired information resides in the cache memory, whereby the penalty of a main memory access need not be incurred. Otherwise, there is a cache miss.

Upon a cache miss, the instruction processor initiates a main memory read to get the information. When the information is supplied, it is stored in the cache memory to replace less recently accessed information. This operation can generally be carried out during the time the processor makes its initial use of the supplied information.

In the case of a cache memory used for storing data, there are two different basic strategies, one of which has a significant impact on the matter of handling replacement. This strategy is referred to as "write back." The other strategy has no significant impact on replacement handling; it is referred to as "write through."

In accord with a write-through strategy, whenever the instruction processor executes a store instruction, it issues a command to initiate a write to main memory, which entails supplying an address and data. It does so even though a cache location happens to be storing a copy of the data in the addressed memory location. One feature of this strategy is that data in memory is kept up to date or correct. This strategy has certain disadvantages. A significant such disadvantage manifests itself when a sequence of memory-accessing instructions are executed, either back-to-back or in such close proximity that the main memory can not keep pace. In such circumstances the throughput of the instruction processor is adversely affected.

In accord with a write-back strategy, whenever the instruction processor executes a store instruction referencing a memory location that results in a cache hit, the data in that cache location is overwritten with the new data without at the same time initiating a write to memory to keep it up to date. Upon such a write to the write-back cache, a dirty bit is set. This is done to indicate that the data stored in the cache location is no longer identical to the contents of the associated memory location.

Further in accord with a write-back strategy, data in a cache location marked dirty is written back to memory in the course of a cache replacement operation. It has long been recognized that the write-back strategy eliminates the problem that back-to-back memory accesses cause in a write-through strategy; however, it has also been long recognized that the cache replacement operation involved in a write-back strategy presents particular complicating problems.

In accord with known techniques for providing a structure and method for handling a replacement operation in support of a write-back strategy, a two-step process is performed serially. In the first step, the dirty entry is written into memory. After the first step is completed, the second step starts. In the second step, the replacement entry is read from memory and loaded into the cache location. The penalty on such a cache replacement operation is severe. In this regard, the event that triggers the operation is a cache miss for data the instruction processor needs to execute an instruction. However, before that needed data are made available to the instruction processor, a relatively long time elapses because of cumulative latency. More particularly, there is the latency time of the memory with respect to the write operation in the initial step; throughout this time the instruction processor is waiting for the data it needs. Then, only after this step is completed, the instruction processor can initiate the memory read. Then, the instruction processor continues to wait until, finally, after the latency time of the memory with respect to the read operation, the needed data becomes available.

The above-described matters are representative of factors demonstrating that a need exists for a data processing system to incorporate an improved subsystem, and carry out a method, for reducing the adverse impact that main memory latency time has had on processor throughput even though a cache memory is provided.

## Summary of the Invention

This invention is based on a new and advantageous approach to the organization and operation of a subsystem of a data processing system which includes an instruction processor and a main memory that has such a relatively large number of addressable memory locations that the main memory has a latency time that is substantially longer than the time in which the instruction processor can initiate successive accesses to the memory.

The invention can be regarded as residing in a combination of elements incorporated in such a subsystem and alternatively can be regarded as residing in a method.

As to defining the invention in terms of such a subsystem of a data processing system, the subsystem comprises buffer memory means having a relatively small number of buffer locations into which data read from the main memory are stored initially as a duplicate of data stored in the main memory and thereafter modified and marked dirty. The subsystem further comprises sequentially operating means including multi-buffer means to provide for replacing data marked dirty with other data read from the main memory and thereafter causing the data marked dirty to be written into the main memory.

In accord with certain preferred features, the multi-buffering means is connected to communicate with the instruction processor via a bus, and includes a processor-to-memory buffering means, a memory-to-processor buffering means, and an address latching means. The sequentially operating means has a plurality of sequentially entered states.

In one of the sequentially entered states, the sequentially operating means transfers an address from the bus to the latching means for use in initiating a read of the main memory. During the latency time involved in such a read to obtain replacement data, the sequentially operating means steps to another state to prepare to transfer data from the bus to the processor-to-memory buffering means. Subsequently, the sequentially operating means enters another state to prepare to transfer replacement data, read from the main memory, into the memory-to-processor buffering means. After the replacement data are transferred into the memory-to-processor buffering means, the sequentially operating means enters another state to prepare to write into the main memory the data stored in the processor-to-memory buffering means.

In the preferred embodiment, a highly advantageous bus-bandwidth matching feature is accomplished by a parallel arrangement of a plurality of a bus switch chips each of which defines a slice of the buffering means. Each bus switch chip has means for connecting to a first predetermined number of conductors of the bus for communicating with the instruction processor, and has means for connecting to a second, larger number of conductors of a memory bus. In the case of the preferred embodiment described in detail below, there are six bus switch chips operating in parallel. Within each bus switch chip, the processor-to-memory buffering means is 8 buffer lines deep. Likewise, the memory-to-processor buffering means is 8 buffer lines deep. Data transfers to memory involve two consecutive transfers that exploit a known advantageous feature referred to as "nibble mode." In the special circumstances in which nibble mode is applicable, substantially less, typically only one-half of the normal, latency time is consumed by the second of two consecutive memory accesses. Each access of a pair of nibble mode accesses results in loading a concatenated group 4 times the width of the parallel data involved in a processor transfer. In this way, the memory bus bandwidth, expressed in terms of megabytes per second closely matches the processor bus bandwidth. Using 120-nanosecond RAM chips to define a concatenated group of 256 bits, an instruction processor operating at a basic clock rate of approximately 55.5 megahertz can read 512 bits of data in less than 400 nanoseconds. This constitutes a peak data transfer rate of 160 megabytes per second.

As to defining the invention in terms of a method, the invention provides a method of operating a data processing system in which a cache memory is provided to store data in cache locations each of which is associated with a large number of main memory locations having a latency time. The method comprises writing data into a cache memory location and in the course of doing so setting a dirty bit for that cache memory location. This step of the method sets the stage for new and advantageous sequentially performed steps of the method. This sequence is triggered by a cache miss on that cache memory location, and includes initiating a read of data from an addressed memory location. During the latency time, the sequence proceeds to transfer data from that cache location to a processor-to-memory buffer. The sequence further includes transferring data read from the addressed memory location through a memory-to-processor buffer to that cache location. Another step in this sequence is to perform a write to another memory location to store in it the data from the processor-to-memory buffer.

In addition to the features of the invention that are summarized above, the invention provides numerous other new and advantageous described below with reference to the preferred embodiment. These numerous new and advantageous features are included in the recitations of the appended claims.

Brief Description of the Drawings

FIG. 1 is a sketch relating to a Central Processing Unit (CPU) comprising various integrated circuit chips, and indicating how certain of the chips are preferably arranged to take advantage of this invention;

FIG. 2 is a block diagram relating to a single-chip instruction processor incorporated in the CPU of FIG. 1, and shows, among other things, an on-chip cache memory and other features that relate to the description of the preferred embodiment of this invention;

FIG. 3 is a block diagram representing elements of a subsystem having multiple buffers defined in accord with the preferred embodiment of this invention; and

FIG. 4 is a block diagram relating to the CPU of FIG. 1, which shows in more detail how certain of the integrated circuit chips are connected to the processor bus, or to the memory bus, or both.

Detailed Description

This detailed description explains the construction and operation of the presently preferred embodiment of this invention, and describes certain features of an overall Central Processing Unit (CPU) that forms part of a larger data processing system in which it is preferably incorporated. Certain specific features of an instruction processor in the CPU are pertinent to this description of the preferred embodiment of this invention, and accordingly those specific features are discussed. The principles of the invention are such that the invention is applicable to a data processing system containing any of various other specific instruction processors, and many of the detailed matters set out below are included in this description to facilitate exposition of these principles within the context of a concrete example.

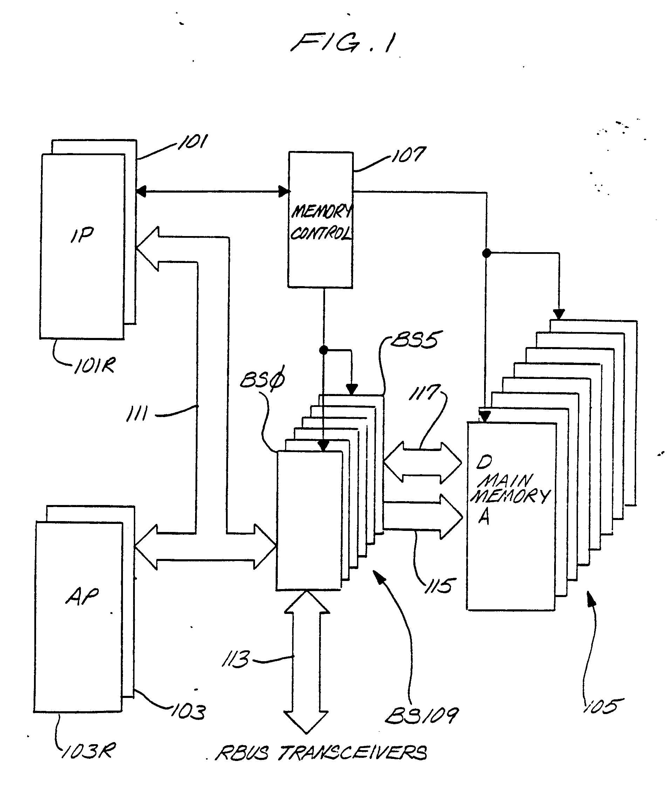

The preferred embodiment resides in a combination of elements in a CPU that preferably is arranged as indicated in the sketch of FIG. 1. In the CPU, there is a single-chip instruction processor 101 that is in active operation, and, suitably, another instruction processor 101R that is inactive and provided only for redundancy. As an option, the CPU can also include an arithmetic processor 103 and a redundant such processor 103R, either of which can serve as a coprocessor for performing arithmetic operations such as floating point calculations under control of the active instrument processor.

A multiplicity of memory chips are organized in 8 memory arrays to define a main memory 105, and an arrangement of miscellaneous integrated circuits are shown collectively as memory control 107. The general function of memory control 107 is to decode commands issued to it by instruction processor 101, and produce various timing and control signals in an appropriate manner to control main memory 105. The commands relate to the selection of various operations such as read and write. The timing and control signals include signals for row and column addressing, typically referred to as RAS and CAS, and for enabling a write, typically referred to as WE. The implementation of memory control 107 is not pertinent to this description of the preferred embodiment of this invention, and the prior art teaches the principles for organizing suitable integrated circuits to implement a memory control arrangment for main memory 105.

A set of 6 bus switch chips BSO through BS5 are arranged in parallel in accord with a bit-slice organization to define a BS 109. Important elements of the preferred embodiment are included in BS 109, and the incorporation of these elements in a bit-slice organized set of chips has significant advantages. These elements of the invention and the advantages that flow from incorporating them, as here in the preferred embodiment, in a bit-slice organized set of chips, are described more fully below.

As also indicated in FIG. 1, all the above-described chips are interconnected. In this regard, there is an processor bus 111, and I/O bus 113, a memory address bus 115, and a memory data bus 117. The BS 109 defines four ports, each for connection to respective bus. The BS is connected to I/O bus 113 for reasons unrelated to this invention.

According to the principles of this invention, one of its elements is incorporated in an instruction processor, and important advantages flow from incorporating this element in a single-chip instruction processor.

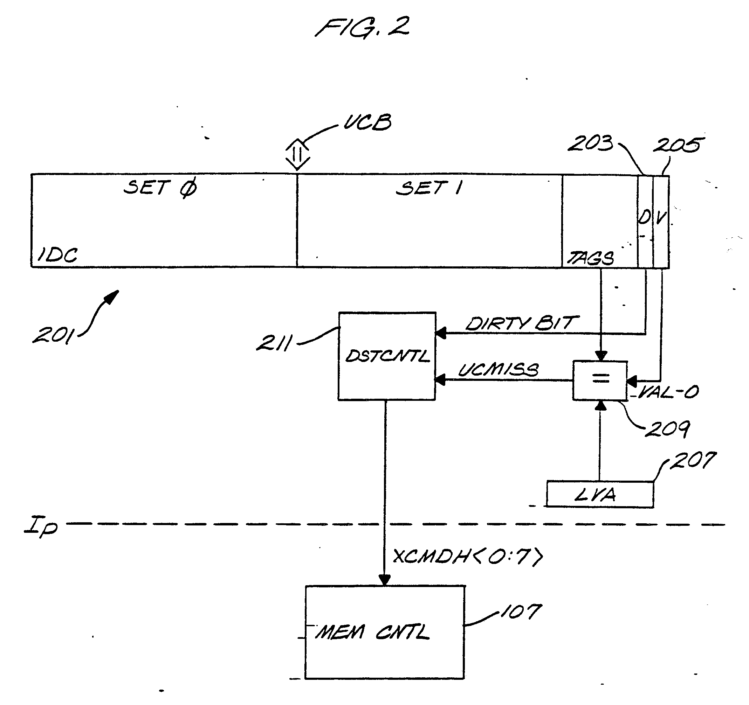

With reference to FIG. 2, there will now be described a cache memory that is defined within instruction processor 101 in accord with a preferred feature of this invention; i.e., implementing a buffer memory means as an on-chip cache within a single-chip instruction processor.

This cache memory is identified in FIG. 2 as IDC 201. "IDC" is an acronym for Instruction Data Cache, and this term is used because IDC 201 stores both instructions and data. As indicated in FIG. 2, IDC 201 comprises multiple columns of cells including a column 203 in which each cell provides for storing a dirty bit. Column 203 is specifically provided in support of the purpose of implementing a write-back strategy. In another column, identified in FIG. 2 as column 205, each cell provides for storing a valid bit, as is customary for a cache irrespective of whether it is used in accord with a write-back strategy. Other columns are described below after the following description of the rows of IDC 201.

With regard to the rows, each of 128 rows defines a separate cache location. The 128 cache locations in IDC 201 are grouped into two sets identified in FIG. 2 as Set 0 and Set 1. In other words, IDC 201 is organized as a 2-set associative cache, with its 128 locations being grouped into 64 addressable 2-set blocks. A cell per such 2-set block stores an LU (Last Used) bit.

Each cache location in IDC 201 provides for storing, alternatively, a block of data or a group of 8 instructions. Each instruction in the instruction repertory of instruction processor 101 has a 64-bit instruction format; thus, a group of 8 such instructions involves 512 bits. IDC 201 has 512 columns corresponding to such a 512-bit wide group.

Each instruction includes a 32-bit control word portion and 32-bit literal portion. The control word portion is used to specify many different actions. The literal portion is used for literal data, absolute addressing, and absolute addresses for branching. A virtual-addressing strategy is employed in instruction processor 101, as further described below.

A block of data likewise involves 512 bits. The 512 bits of a block of data define numerous groups. Grouped by bytes, the 512 bits define 64 bytes. Other groupings are by 16-bit words, 32-bit longwords, and 64-bit quadwords.

The quadword grouping is co-extensive with the width of processor bus 111 (FIG. 1). A 32-bit wide portion of processor bus 111 is multiplexed for sending either a 32-bit address or a 22 bit longword. This portion is referred to herein as processor address bus XA. The other 32-bit wide portion of procesor bus 111 is referred to herein as processor data bus XD. When processor address bus XA is used to transfer data, it cooperates in parallel with processor data bus XD so that data are transferred serially by quadword: i.e., 64-bits at a time.

In instruction processor 101, there are other cache memories that share a common bus with IDC 210. This common bus is referred to herein as the Unified Cache Bus (UCB). Cache memory 210 has a UCB port by which it is connected to the UCB. As for connection of the UCC port to the UCB, it comprises 512 connections that are logically divided into 16 groups with 32 per group. One of these groups at a time is involved in transferring a longword between processor data bus XD and a respectively indexed set of columns of IDC 201. The data groups are referred to herein as UCD<0> through UCD<15>.

A Latch Virtual Address (LVA 207) register includes cells for storing a 32-bit address used to reference storage locations. Within instruction processor 101 and within certain instructions it executes, each of certain storage locations is referenced by a virtual address that is translated into a physical address. The techniques for using page tables and page table entries to translate virtual addresses into physical addresses are known, and such matters are not relevant to this description of the preferred embodiment.

In addition to referencing a memory location in main memory 105, a virtual address is used in accessing a cache memory location in IDC 201. A virtual address is divided into fields. One such field comprises the 20 most-significant bits, VA[31:12], and is referred to as the tag field. This 20-bit tag field can have any of $2^{20}$ ($>1.000,000$) values. Another field, VA[11:6], is referred to as the block field. This 6-bit field can have any of 64 values. Another field, VA[5:2] is referred to as the entry field. This 4-bit field can have any one of 16 values.

In the course of a cache look-up operation, the block field is used to select one of the 64 identifiable 2-set blocks. A further selection to the level of a cache location is made on the basis of the LU bit which points to one of the two cache locations. Each selected cache location can, at any given point in operation, be associated with any one of many different memory locations. For example, in the cache location in set 0 of 2-set block 0 one of the byte-wide groups of cells (64 such groups per location) that can be associated with any of a sequence of virtual addresses, which expressed in decimal are: 0, 4096, 8196, etc. There are (within the 4-gigabyte address space provided by 32 bits) $2^{20}$ virtual addresses in such a sequence. The stored tag information indicates which one of the $2^{20}$ possible mappings is presently involved. If the tag field of the virtual address equals the stored tag field, there is a cache hit. Because of the 2-set associative organization, two tag-field look-up operations are performed serially before determining that a cache miss has occurred.

A comparator 209 asserts a UC miss signal upon such a cache miss. If the valid bit is false, this indicates that the accessed cache location does not contain valid data; accordingly, comparator 209 asserts the UC miss signal whenever the valid bit is false. If the valid bit is true, the dirty bit is true and the tags to not match, there is a need for a cache replacement operation. A circuit arrangement, identified as DSTCNTL 211 in FIG. 2, in instruction processor receives numerous signals including a dirty bit signal and the US miss signal. In instruction processor 101, DSTCNTL is a programmable logic array used to implement functions performed by circuitry generally referred to in this art as a processor timing and control unit. The implementation of DSTCNTL is not relevant to this description of the preferred embodiment, and the prior art teaches the principles for organizing suitable circuitry to implement a DSTCNTL for performing the functions of a processor timing and control unit. Similarly, there are many additional registers and latches within the instruction processor that are not specifically shown in FIG. 2 because they are not relevant to this description of the preferred embodiment of this invention.

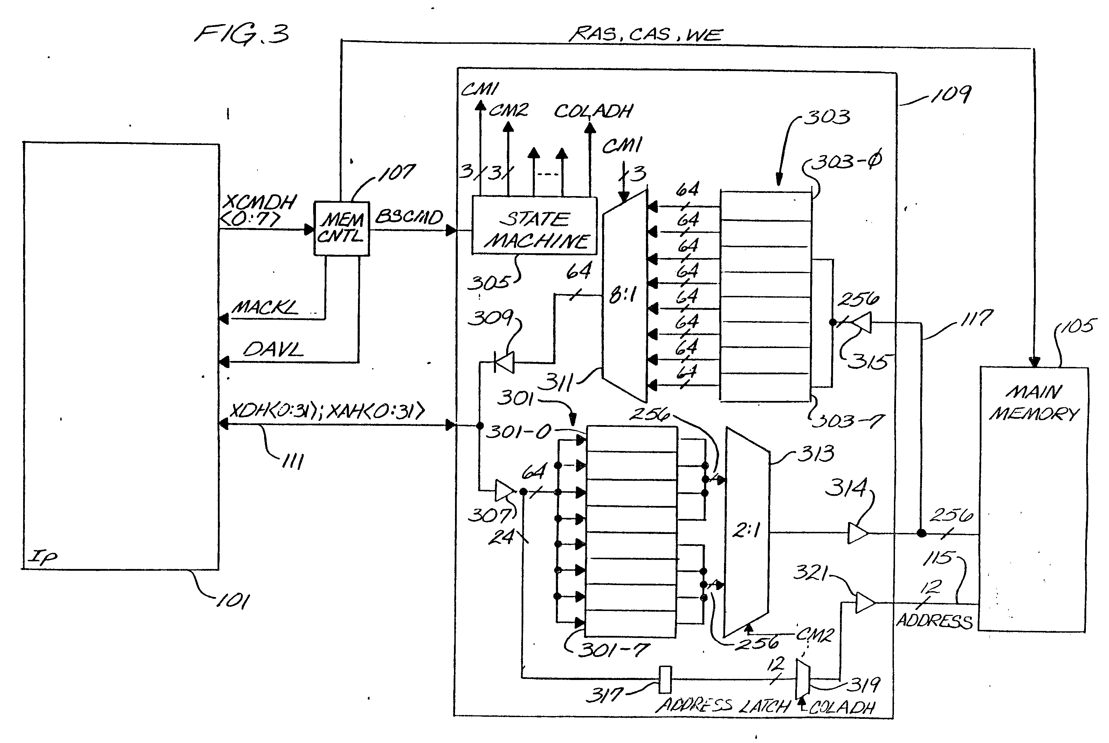

With reference to FIG. 3, BS 109 defines a multi-buffer means including a processor-to-memory buffer 301 and a memory-to-processor buffer 303. Each of these buffers is eight registers deep. The registers are identified in FIG. 3 as registers 301-0 through 301-7 in processor-to-memory buffer 301, and registers 303-0 through 303-7 in memory-to-processor buffer 303. Each such register provides for storing a 64-bit wide quadword. (Preferably, a parity bit is appended to each longword, so that each register is 66 cells wide. To simplify FIG. 3 and this description of the structure provided for data transfers, the structure provided for transferring parity bits is not shown in FIG. 3, and the rest of its description concerns only the structure for the data.)

As stated above, BS 109 is defined by 6 bus switch chips in accord with a bit-slice organization. For numerous reasons such as to provide standardization in fabrication, each bus switch has the same construction. To some extent, the replication of structure in the bit-slice organization corresponds to separate, parallel functions. More particularly, the above-mentioned quadword-wide registers are formed in concatenated fashion by cells distributed among the parallel bus switches. These replicated cells perform the separate parallel functions of storing different bits of parallel data. On the other hand, certain common control functions affect a register as a whole. A representative example of such a common control function is the function of producing a control signal synchronized with a clock global to the bus switch chips in the course of transferring data into or out of the cells of a quadword-wide register. In this regard, FIG. 3 shows a state machine 305 for performing such common control functions. Each bus switch has its own duplicate state machine for producing timing and control signals for synchronously sequencing the operation of its slice of the various parallel circuits defining BS 109. The state machine that is duplicated in each bus switch can suitably be implemented by a programmable logic array that defines a sequence of states and asserts various control signals as a logical function of its present state.

Other replicated structure that defines BS 109 also performs separate parallel functions as opposed to common control functions. Some of this other replicated structure defines gating circuitry 307, which comprises separate identical gating circuits distributed among the bus switch chips such that each chip has the gating circuits for performing its share of the function of transferring data from processor bus 111 into the cells it contributes to define the quadword-wide registers of processor-to-memory buffer 301. These transfers from processor data bus are effected a quadword at a time, and the registers are sequentially selected to accumulate a total of eight quadwords in buffer 301 where they are held until after data instruction processor 101 needs have been read and transferred to it. Other such replicated circuitry defines gating circuitry 309 and multiplexer 311 which cooperate to perform the function of transferring data, one quadword at a time, from sequentially selected registers of memory-to-processor buffer 303 to processor bus 111. Other such replicated circuitry defines multiplexer 313 and bus drivers 314 which cooperate to perform the function of transferring data, four quadwords at a time, from sequentially selected groups of the registers of processor-to-memory buffer 301 to memory data bus 117. Other such replicated circuitry defines gating circuitry 315 which performs the function of transferring data, four quadwords at a time, from memory data bus 115 to sequentially selected groups of registers of memory-to-processor buffer 303. Other such replicated circuitry defines circuitry involved in addressing main memory. This includes an address latch register 317, a row-and-column address multiplexer 319, and bus drivers 321 for memory address bus 115.

Instruction processor 101 initiates a request for system support to effect a read-replace operation by issuing a selected command to memory control 107. This and other such commands are defined by coding an 8-bit wide signal referred to as XCMD<0:7>. Memory control 107 sends handshaking signals to instruction processor 101, including an acknowledge signal designated as MACKL, and another signal, designated DAVL, relating to the time when data are available. It decodes the replacement command and asserts a BSCMD signal it applies to BS 109.

Upon receiving a BSCMD to support a read-replacement operation, state machine 305 enters the first of a sequence of states through which it proceeds in the manner than now will be generally described. As is often the case for a state machine for producing timing and control signals, state machine 305 asserts some of the control signals it produces during more than one of its states. In broad terms, the various states through which state machine 305 proceeds during the read-replacement operation are such as to provide four main phases. The first phase entails getting a read address from processor 101, and latching it so it can be presented for decoding by main memory 105 for the required time. The second phase entails parallel processes, one of which entails a transfer of the dirty data (i.e., data read from a cache location marked dirty that needs to be replaced). More particularly, during the latency time for a main memory read, the dirty data are transferred, one quadword at a time, into sequentially selected registers of processor-to-memory buffer 301. Another aspect of this second phase in the preferred embodiment relates to the two accesses made to main memory in the nibble mode. The first of this pair of read accesses results in loading registers 303-0 through 303-3 of memory-to-processor buffer 303. The second of these accesses results in loading of registers 303-4 through 303-7 of memory-to-processor buffer 303. The third phase entails transferring replacement data from memory-to-processor buffer 303 to instruction processor 101; this is done a quadword at a time. Thus, significantly, instruction processor 101 receives the replacement data within half the elapsed time that is involved in prior art approaches in which the dirty data are written into main memory before the read operation to obtain replacement data even begins. The fourth phase entails writing the dirty data to memory. It is a matter of choice whether or not to arrange to begin this write operation immediately after the end of the pair of read accesses. In the CPU of which the presently preferred embodiment is a subsystem, a communications convention has been adopted which entails having instruction processor 101 send the write address after it has received the data it needs, rather than during the latency time.

With respect to particulars concerning gating circuitry 307, this circuitry comprises 64 gating circuits, each of which is of the type generally referred to as a tri-state gate. Of these 64 gates, each of 32 gates has its input connected to receive a respective one of 32 parallel signals, identified collectively as XDH<0:31>, via the data bus portion of processor bus 111. Each of the remaining 32 gates of gating circuitry 307 has its input connected to receive a respective one of 32 parallel signals, identified collectively as XAH<0:31>, via the address bus portion of processor bus 111.

In accord with a communications convention adopted for the CPU, the initial information instruction processor sends after issuing the read-replacement command is a read address, and it immediately thereafter sends a sequence of 8 quadwords of dirty data. Of the 32-bits of an address, only 24 bits are used in an intra-CPU transfer of an address. This is so because each CPU in an overall data processing system having up to 8 CPUs is allocated a 128 megabyte portion of a 2 gigabyte memory space.

The address latch register 317 is 24-bits wide. It holds each address received by BS 109 incident to a memory read or write. As stated above, memory 105 is addressed by row and column, with RAS and CAS timing control. Accordingly, BS 109 first sends memory a 12-bit wide address for a row, while memory control 107 asserts the RAS signal, then BS 109 sends a 12-bit wide address for a column while memory control 107 asserts the CAS signal. The multiplexer 319 that is coupled between address latch register 317 and memory address bus 115 sequentially sends the two portions of the address one at a time. One of the timing and control signals produced by state machine 305 is identified as COLADH (an acronym for column address). During one of the sequence of states through which state machine proceeds, it asserts the COLADH signal to cause multiplexer 319 to transfer the 12-bit column portion of the 24-bit address in address latch 317 to output drivers 321. While the COLADH signal is low (false), multiplexer 319 passes the row address portion of the address. At the trailing edge of the CAS signal, main memory 105 presents valid read data to memory data bus 117.

With respect to further particulars concerning gating circuitry 315, it comprises 256 gating circuits, each of which is of the type generally referred to as a tri-state gate. Each of these gates has its input connected to a respective one of 256 conductors of the memory data bus 117. The 256-bits of data read from memory are transferred in parallel, through gating circuitry 315, and in response to a control signal produced by state machine 305 are loaded into four of the eight registers of memory-to-processor buffer 303.

Having controlled the reading of one half of a 512-bit block of data during the states described above, state machine 305 proceeds to the next state to cause the second of a pair of nibble-mode reads. With regard to this second read, state machine 305 enters a state to cause gating circuitry 315 to load the 256 bits of this second read into registers 311-4 through 311-7. Next, state machine 305 sequences through eight consecutive states, each for causing a transfer from a respective one of the registers of memory-to-processor buffer 303 to processor 101.

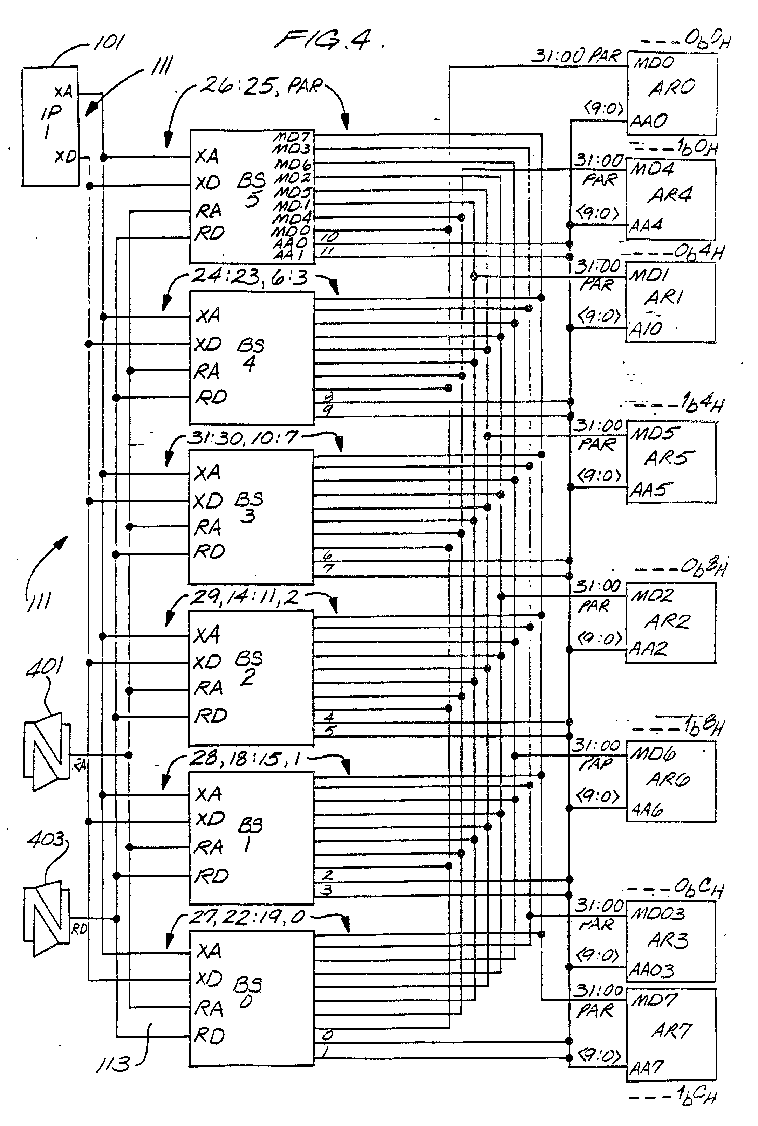

With reference to FIG. 4, there will now be set fourth further particulars concerning the bit-slice organization of BS 109. Each buffer switch chip BS0-BS5 has numerous terminal sets. One of these terminal sets is an XD terminal set; it comprises six terminals. Another of these terminal sets is an XA terminal set; it likewise comprises six terminals. In combination, these provide 12 X-type terminals per chip. The X-type terminals are available for connecting to processor bus 111. With six bus switches, each having 12 X-type terminals so available, there is a total of 72 X-type available terminals. Of the combined available total of 72 X-type terminals, 66 X-type terminals are connected to provide for transfers of 64-bit quadwords and two parity bits, each such parity bit being for a separate longword portion of the quadword.

Each bus switches has another pair of terminal sets RA and RD that are available for connection to bus 113 which is used, together with transceivers 401 and 403, for communication with other CPUs in the same overall data processing system. Each CPU in such a system connects to a bus designated RBUS (FIG. 1) for such inter-CPU communication and for various I/O communications.

Each bus switch further has eight terminals sets MDO through MD7; each of these terminal sets comprises six terminals. In combination, these provide 48 M-type terminals per chip. The M-type terminals are available for connection to memory bus 117. With six bus switches, each having 48 such M-type terminals so available, there is a total of 288 available M-type terminals. Of the combined total of 288 M-type terminals, 264 terminals are connected to memory data bus 117 to provide for transfers of 256 bits of data in parallel with eight parity bits.

Each bus switch further has two-A-type terminals, AA0 and AA1. The A-type terminals connect to memory address bus 115. With six bus switches, each having two M-type terminals, there is a total of 12-A-type terminals to provide for transferring, on a multiplexed basis, a 12-bit row address and a 12-bit column address.

With respect to the particulars concerning the connection of the six bus switch chips to the various buses, there will first be described the connection of bus switch BS0. The XA portion of processor bus 111 has 33 conductors for 32 bits of data and a parity bit.

These conductors are referred to herein collectively as XAB [31:0, PF]. The XDB portion of processor 111 likewise has 33 conductors for two bits of data in a parity bit. These conductors are referred to herein collectively as XDB [31:0, PAR].

As for bus switch BS0, its six XA-type terminals are connected to conductors XAB [27, 22:19, 0] respectively. This is indicated in FIG. 4 by the corresponding numbers 27, 22:19, 0, appearing next to the depiction of bus switch BS0. The six XD-type terminals of bus switch BS0 are connected to conductors XDB [27, 22:19, 0] respectively. That is, the same numbers (27, 22:19, 0] that apply to the XA-type terminals of bus switch BS0 apply equally to the XD-type terminals. This is also the case for the RA-type and RD-type terminals of bus switch BS0 with respect to bus 113. This is also the case the M-type terminals of bus switch BS0 with respect to a slice of memory data base 117.

As to designating a conductor of a slice of memory data bus 117, a general designation is $MDB_i[J]$, with i being in the range of 0 to 7, and J being in the range of 0 to 31 to being PAR (parity bit). The conductors of memory data bus 117 are connected to eight memory arrays, AR0 through AR7. More particularly, conductors $MDB_0[31:0, PAR]$ are connected to memory array AR0; conductors $MDB_1[31:0, PAR]$ are connected to memory array AR1, etc. With respect to bus switch BS0, its six MD0-type terminals are connected to $MDB_0[27, 22:19, 0]$. These same numbers apply with respect to the other slices of memory data bus 117 to which the MD1-type through MD7-type terminals of bus switch BS0 connect.

As to the A-type terminals of bus switch BS0, they are connected to provide the two least significant bits of a 12-bit matrix addressed to each of the eight memory arrays AR0 through AR7.

As to bus switch BS1, the numbers that apply to its connections to memory bus 111, bus 113, and memory data bus 117 are (28, 14:11, 2). Its A-type terminals provide the two next most significant bits of an address to each of the memory arrays. The foregoing sequence with respect to A-type terminals continues for bus switches BS2 through BS5 so that in combination, the bus switches provide a 12-bit matrix address to each of the memory arrays. As to the numbers that apply for connection of bus switches BS2 through BS5 to the other buses, they are as follows: for bus switch BS2, they are (29, 14:11, 2); for bus switch BS3, they are (31:30, 10:7); for bus switch BS4, they are (24:23, 6:3); and for bus switch BS5, they are (26:25, PAR).

Array AR0 contains all of the memory locations that have addresses for which each of the last five bits has the binary value 0. This is represented generally by the designation: "$\_0_b0_H$" where the subscript b denotes binary value and the subscript H denotes hexadecimal value.

Array AR4 contains all of the memory locations for which each of the last four bits has the binary value 0, and the next most significant bit has the binary value 1. This is represented by the designation "$\_1_b0_H$".

Array AR1 contains all of the memory locations for which the last four bits have the hexadecimal value 4, and the next most significant bit has the binary value 0. This is represented by the designation "$\_0_b4_H$".

Array AR5 contains all of the memory locations for which the last four bits have the hexadecimal value 4, and the next most significant bit has the binary value 1. This is represented by the designation "$\_1_b4_H$".

Array AR2 contains all of the memory locations for which the last four bits have the hexadecimal value 8, and the next most significant bit has the binary value 0. This is represented by the designation "$\_0_b8_H$".

Array AR6 contains all of the memory locations for which the last four bits have the hexadecimal value 8, and the next most significant bit has the binary value 1. This is represented by the designation "$\_1_b8_H$".

Array AR3 contains all of the memory locations for which the last four bits have the hexadecimal value C, and the next most significant bit has the binary value 0. This is represented by the designation "___0$_b$C$_H$".

Array R7 contains all of the memory locations for which the last four bits have the hexadecimal value C, and the next most significant bit has the binary value 1. This is represented by the designation "___1$_b$C$_H$".

As stated at the outset of this detailed description, it is directed to the presently preferred embodiment of the invention and sets out many specific features of that embodiment and the instruction processor in which it is preferably incorporated. The following claims are directed to defining the invention and embrace implementations and practices in addition to those set forth in detail above.

The features disclosed in the foregoing description, in the following claims and/or in the accompanying drawings may, both separately and in any conbination thereof, be material for realising the invention in diverse forms thereof.

## Claims

1. In a data processing system that includes an instruction processor (101) and a main memory (105) with such a relatively large number of addressable memory locations that the main memory has a latency time that is substantially longer than the time in which the instruction processor can initiate successive accesses to the main memory, a subsystem characterised by: buffer memory means (201) having a relatively small number of buffer locations into which data read from the main memory are stored initially as a duplicate of data stored in the main memory and thereafter modified and marked dirty; sequentially operating means (109) for replacing data marked dirty with other data read from the main memory and thereafter causing the data marked dirty to be written into the main memory.

2. A subsystem according to claim 1, wherein the buffer memory means comprises a processor-to-memory buffer (301) and a memory-to-processor buffer (303), and wherein the data marked dirty are stored into the procesor-to-memory buffer during the latency time to read the replacement data, and wherein the replacement data are stored into the memory-to-processor buffer before the data marked dirty are written to memory.

3. A subsystem according to claim 2, wherein each buffer has multiple registers (301-0 to 301-7 and 303-0 to 303-7) for use in support of means (BS0 to BS5) for susbtantially matching the bandwidth of memory-to-buffer transfers with the bandwidth of buffer-to-processor transfers.

4. A subsystem according to any one of claims 1 to 3, wherein the buffer memory means is defined by a set of integrated circuit chips organized for bit slice arangement.

5. A subsystem according to claim 4, wherein each such chip includes plurality of memory cells that the chip contributes to define the buffer memory means.

6. A method of operating a data processing system in which a cache memory is provided to store data in cache locations each of which is associated with a large number of main memory locations having a latency time, the method comprising: writing data into a cache location and in the course of doing so setting a dirty bit for that cache memory location; initiating a read-replacement sequence of steps upon detecting a cache miss on that cache location; proceeding with the read-replacement operation by initiating a read of data from an addressed main memory location; further proceeding during the latency time to transfer data from that cache location to a processor-to-memory buffer; transferring data read from the addressed memory location, through a memory-to-processor buffer, to that cache location; and performing a write to another addressed memory location to store in it data from the processor-to-memory buffer.

## FIG. 1

# FIG. 2

FIG.3

FIG.4.